# EUROPÄISCHE PATENTSCHRIFT

(11) **EP 0 262 555 B1**
(45) Veröffentlichungstag und Bekanntmachung des Hinweises auf die Patenterteilung: **22.11.1995**
(21) Anmeldenummer: 87113807.9
(22) Anmeldetag: 22.09.1987
(51) Int. Cl.: G06F 17/14

(54) **Schaltung zur Discreten Cosinus Transformation**
Circuit for the dicrete cosine transform
Circuit pour transformée en cosinus discrète

(30) Priorität: 13.12.1986 DE 3642664; 01.10.1986 US 914732
(43) Veröffentlichungstag der Anmeldung: 06.04.1988
(73) Patentinhaber: Deutsche Thomson-Brandt GmbH, 78003 Villingen-Schwenningen (DE)
(72) Erfinder: Hartnack, Wolfgang, Dipl.-Ing., D-3005 Hemmingen 1 (DE); Keesen, Heinz-Werner, Dr.-Ing., D-3000 Hannover 1 (DE); Schütze, Herbert, Dipl.-Ing., D-3000 Hannover 81 (DE)
(74) Vertreter: Einsel, Robert, Dipl.-Ing.

(56) Entgegenhaltungen:
- US-A- 3 662 161
- US-A- 4 189 748
- US-A- 4 293 920
- PHILIPS TECHNICAL REVIEW Band 38, Nr. 4/5, 1978/79, Seiten 119-130; H. BACCHI et al.: "Real-time orthogonal transformation of colour-television pictures"

## Beschreibung

### Schaltung zur Transformation

Die Erfindung betrifft eine Schaltung zur Transformation.

Auf den Seiten 91-96 der Zeitschrift "Design&Elektronik", Verlag "Markt und Technik", Ausgabe 20 vom 30.09.1986, ist der Artikel "Schnelle Diskrete Cosinustransformation mit Hilfe des µPD 77230" erschienen. Auf der Seite 92 ist das zugehörige Blockschaltbild des MikroPD angegeben. Die 55 Bit Gleitkomma ALU verarbeitet einen vollständigen Satz von optischen und logischen Operationen.

In US-A-4293920 ist eine analoge Hin-Transformationsschaltung angegeben, die nur positive Eingangssignale verarbeiten kann und bei der die negative Wichtung von Transformationskoeffizienten durch eine spezielle Schaltung mit FETs erreicht wird. Das Eingangssignal wird nicht in Betrag und Vorzeichen aufgespalten.

Der Erfindung liegt die Aufgabe zugrunde, eine Schaltung anzugeben, die eine schnelle Berechnung von Transformationswerten erlaubt.

Diese Aufgabe wird durch die Merkmale des Anspruchs 1 gelöst. Vorteilhafte Weiterbildungen der Erfindung sind in den abhängigen Ansprüchen genannt.

Zum besseren Verständnis der Erfindung wird nachstehend ein Ausführungsbeispiel anhand von Zeichnungen näher erläutert.
Es zeigen
- Fig. 1: ein Blockschaltbild und
- Fig. 2: eine Multiplikationsschaltung zur Berechnung von Transformationswerten.

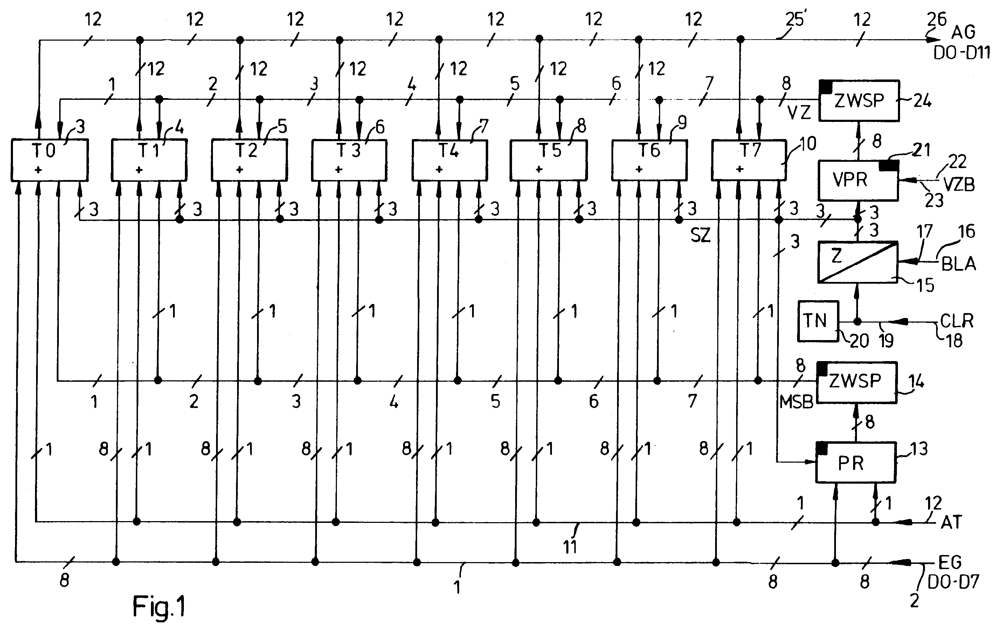

Fig. 1 zeigt einen Datenbus 1, über den Binärsignale D0-D7 von einem Eingang 2 zu Transformierern 3-10 übertragen werden. Über einen weiteren Datenbus 11 mit einer Leitung werden von einem Eingang 12 weitere digitale Signale zu den Transformierern 3-10 und einem Multiplizierer 13 übertragen. Der Multiplizierer 13 ist vorteilhaft durch ein PROM (Programmable Read Only Memory) 87S421 der Firma National Semicondutor gebildet. Auf der Datenleitung des Datenbusses 11 zeigt das Datensignal an, ob entweder eine 8 * 8 oder 2 * (4 * 8) DCT Matrix verwendet ist. Die Signale auf den Datenbussen 1 und 11 fungieren als Adresse an den Eingängen der Transformierer 3 - 10 und des Multiplizierers 13. Da ein in den Transformierern 3 - 10 gespeicherter Faktor maximal 1,4 beträgt, wird vorteilhaft von dem Multiplizierer 13 das höchstwertigste Bit (MSB - Most significant Bit) extern berechnet und dann an die einzelnen Transformierer 3 - 10 abgegeben. Die niederwertigsten Bits (LSB - Last significant Bit) werden in Multiplizierern erstellt, die in den Transformierern 3 - 10 vorhandenen sind. Der Multiplizierer 13 überträgt das Most significant Bit als Digitalsignal von seinen Ausgängen über acht Datenleitungen auf einen Zwischenspeicher 14. Der Zwischenspeicher 14 speichert das Most significant Bit zwischen und gibt es über acht Datenleitungen, jeweils eine Datenleitung für einen Transformierer 3 - 10 finden Multiplikationen, Additionen bzw. Subtraktionen und Zwischenspeicherungen statt. Die Transformierer 3 - 10 transformieren die an dem Eingang 2 anstehenden Daten in einen anderen Bereich.

Bei einer Hintransformation werden Daten aus dem Zeitbereich in einen Frequenzbereich transformiert, bei einer Rücktransformation werden Daten aus dem Frequenzbereich in den Zeitbereich transformiert. Hintransformationen finden in einem Quellencoder eines Senders, Rücktransformationen in einem Quellendekoder eines Empfängers statt. Quellenkoder und Quellendekoder können Bestandteile eines digitalen Videorecorders sein. In der Mathematik entspricht der Transformation eine Matrizenmultiplikation. Bei der Diskreten Cosinus Transformation (DCT) sind Transformationskoeffizienten, das sind die Faktoren einer Matrix, verwendet, die spalten- oder zeilenweise eine Cosinusfunktion nachbilden. Die Bildung von Transformationskoeffizienten einer DCT ist z.B. erläutert auf der Seite 20 in der vom Fachbereich Elektrotechnik der Gesamthochschule Wuppertal genehmigten Dissertation "Ein Beitrag zur Informationsreduktion bei Fernsehbildsignalen mit Transformationscodierung und adaptiver Quantisierung" von Robert Sell. Ein 8 * 8 Bildpunkte großer Fernsehbildausschnitt, im folgenden Block genannt, weist die zu transformierenden 8 * 8 Luminanz- oder Chrominanzwerte einer 8 * 8 Matrix auf. Die Luminanz- oder Chrominanzwerte sind digitalisierte Videosignale. Ein Luminanz- oder Chrominanzwert steht parallel als binäres Signal D0-D7 auf dem 8 bit breiten Datenbus 1 an.

Bei einer Hintransformation und bei einer Rücktransformation werden jeweils drei Matrizen miteinander multipliziert. Bei der zweidimensionalen Transformation wird bei der Hintransformation zunächst der Block in waagerechter Richtung eindimensional, danach in senkrechter Richtung eindimensional transformiert. Eine Umkehrung ist auch möglich, also zuerst die senkrecht eindimensionale, danach die waagerecht eindimensionale Transformation. Bei der zweidimensionalen Rücktransformation wird zunächst in senkrechter Richtung eindimensional, danach in waagerechter Richtung eindimensional transformiert. Auch hier ist eine Umkehrung möglich. Bei der eindimensionalen waagerechten Transformation wird die zu transformierende Matrix achtmal zeilenweise mit den acht Koeffizienten einer Zeile multipliziert, bei der eindimensionalen senkrechten Transformation achtmal mit den acht Koeffizienten einer Spalte. Weil die zweidimensionale Hin- bzw. Rücktransformation sich jeweils in zwei eindimensionale Hin- bzw. Rücktransformationen aufspalten lassen, sind für die beiden eindimensionalen Multiplikationen der Hin- bzw. Rücktransformationen die gleichen Transformatoren 3-10 geeignet. Der 8*8 bzw. der 2*(4*8) Block nach der ersten eindimensionalen Hin- bzw. Rücktransformation muss dann lediglich transponiert werden, das heißt, die Adressen in waagerechter und senkrechter Richtung müssen vertauscht werden. Die zwei Multiplikationen dreier 8*8 Matrizen, jede weist also 8 Zeilen und acht Spalten auf, sind seriell durchgeführt. Die zu transformierenden Werte einer Matrix durchlaufen die Schaltung gemaß Fig. 1 zweimal seriell und werden zwischenzeitlich über den Ausgang 26 in einem nicht dargestellten RAM zwischen gespeichert und danach wieder auf den Eingang 2 gegeben.

Ein Zähler 15 erhält über eine Leitung 17 von einem Eingang 16 ein Blockanfangssignal und über eine Leitung 19 von einem Eingang 18 ein Taktsignal. Bei einer Blockgröße von 64 Werten, das entspricht einer Matrix von 8 x 8 Werten, wird das Blockanfangssignal bei Blockanfang bzw. nach Bearbeitung der 64 Werte gesendet. Das Blockanfangssignal setzt den Zähler auf null zurück. Der Zähler 15 wird vom Blocksignal auf der Leitung 19 getaktet und zählt im Falle von 64 Werten bis auf 64 hoch. Das Blocksignal wird über ein Taktnetzwerk 20 an die Zwischenspeicher 14 und 24 gelegt, die vorteilhaft durch 74LS374 der Firma Texas Instruments gebildet sind. Der Zähler 15 steuert mit seinen drei LSB Ausgängen ein Vorzeichen PROM 21 und die Adressierung des Multiplizierers 13 und der Transformatoren 3 - 10. Die acht Koeffizienten einer Zeile bzw. Spalte sind in den acht Transformierern 3-10 enthalten. Da seriell achtmal zeilenweise bzw. spaltenweise multipliziert ist und jede Zeile bzw. Spalte andere Koeffizienten aufweist, wird die jeweils aktuelle Zeilenadresse bzw. Spaltenadresse vom Zähler 15 mit Hilfe von drei LSB auf drei Leitungen mit dem Signal SZ (aktuelle Spalte bzw. Zeile) angegeben. Das Vorzeichen PROM 21 ist ein Speicher, der als Multiplizierer arbeitet. Mathematisch werden in diesem Speicher Vorzeichen miteinander multipliziert. Das Vorzeichen PROM 21 wird vorteilhaft durch ein 74S288 oder 74S287 der Firma National Semiconductor gebildet. Am Eingang 22 der Leitung 23 steht das Vorzeichenbit an, das zum am Eingang 2 stehenden Chrominanz- oder Luminanzwert gehört. Vorzeichen von Werten werden getrennt von den Werten berechnet, weil somit für den Betrag der Werte ein 8 Bit breiter Datenbus 1 zur Verfügung steht. Das Vorzeichenbit und die 3 LSB des Zählers 15 wirken als Adresse am Speicher 21, unter der 8 Werte, die einem Vorzeichen entsprechen, aufgerufen werden und zum Zwischenspeicher 24 gegeben werden. Der Zwischenspeicher 24 puffert diese acht Werte zwischen und gibt jeweils einen dieser acht Werte an einen der Transformierer 3 - 10. Jeder der Transformierer 3 - 10 weist 12 Datenausgänge D0 - 11 auf, die zu einem Datenbus 25 zusammengefaßt werden. Die Transformierer 3 - 10 geben Digitalsignale aus, die als binärer Wert einem transformierten Wert entsprechen und numerisch einen Wert von 2 exp 12, das sind 4.096, darstellen und am Ausgang 26 anstehen. Die Schaltung gemäß Fig.1 ist anwendbar für einen Quellencoder in einem Sender und für einen Quellendekoder in einem Empfänger. Der Unterschied liegt in den Speicherinhalten der Transformierer 3-10 und des Multiplizierers 13.

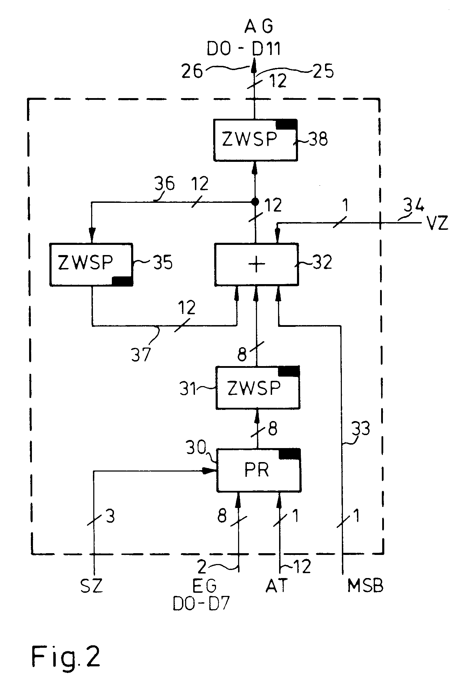

Jeder der Transformierer 3 - 10 ist vorteilhaft gemäß der Fig. 2 aufgebaut. Der Speicher 30 ist vorteilhaft durch ein PROM 87S421 gebildet und arbeitet als Multiplizierer. Die am Eingang 2 anstehenden Daten D0 - D7 werden in dem Multiplizierer 30 mit den Transformationskoeffizienten multipliziert. Die Transformationskoeffizienten sind in der Verdrahtung des PROMs enthalten. Bei der 8*8 Hintransformation sind die Beträge der DCT Koeffizienten spiegelsymmtrisch, das heißt in jeder Zeile der Transformationsmatrix ist der erste dem achten, der zweite dem siebten, der dritte dem sechsten und der vierte dem fünften Koeffizienten gleich. Bei der 2*(4*8) Hintransformation und bei der 8*8 bzw. der 2*(4*8) Rücktransformation ist diese Spiegelsymmetrie nicht vorhanden. Das Signal auf der Leitung 12 zeigt die Art der Transformation (AT) mit dem Signal AT an, ob eine 8*8 oder eine 2*(4*8) Transformation gewählt ist. In dem Speicherinhalt der PROMs 13 und 30 wird berücksichtigt, ob eine (Hin-) Transformation in einem Sender oder eine Rücktransformation in einem Empfänger vorgesehen ist. Nach der Multiplikation werden acht LSB des Ergebnisses zu einem Zwischenspeicher 31 weitergegeben. Der Zwischenspeicher 31 ist vorteilhaft durch ein 74LS374 gebildet. Der Zwischenspeicher puffert das Ergebnisund gibt das Ergebnis als Digitalsignal über acht Leitungen zu dem Addierer 32. Über die Leitung 33 gelangt das MSB vom Zwischenspeicher 14 zu einem Eingang des Addierers 32. Der Addierer 32 ist vorteilhaft durch 3 Bausteine 74F382 der Firma Fairchild gebildet. Über die Leitung 34 wird das zugehörige Vorzeichen über eine einadrige Leitung vom Zwischenspeicher 24 zum Addierer 32 gegeben. Zu Beginn einer Transformation ist der Zwischenspeicher 35 auf null gesetzt und liefert über die 12 Datenleitungen des Datenbusses 37 den Summanden null an den Addierer 32. Die erste Summe setzt sich aus dem Produkt der 2 Multiplizierer 13 und 30 zusammen. Nach der ersten Summenbildung wird die Summe als Ergebnis über die 12 Datenleitungen des Datenbusses 36 im Zwischenspeicher 35 abgelegt. Nach der zweiten Multiplikation wird das Produkt mit dem ersten Produkt aus dem Zwischenspeicher 35 addiert und wieder im nächsten Schritt im Zwischenspeicher 35 abgelegt. Nach acht Additionen wird das Ergebnis über den Zwischenspeicher 38 an den Ausgang 26 angelegt. Die acht Werte aus den Transformierern 3 - 10 werden seriell auf den Datenbus 25 an den Ausgang 26 angelegt. Das Taktnetzwerk 20 steuert über das Blocksignal die Zwischenspeicher 30, 35 und 38.

## Patentansprüche

1. Schaltung zur Transformation oder Rücktransformation von jeweils N Eingangs-Binärsignalen (EG, D0-D7) in jeweils N Ausgangs-Binärsignale (AG) zwischen Zeitbereich und Frequenzbereich mittels einer DCT, **gekennzeichnet durch:**
- N Transformierer (3-10), denen jeweils die Betragswerte von N Binärsignalen zugeführt werden und die Speichermittel (30) mit darin gespeicherten Transformations-Koeffizienten ohne zugehörige Vorzeicheninformation enthalten, zu deren Adressierung die Betragswerte der Binärsignale nacheinander verwendet werden und die mit dem jeweiligen Transformations-Koeffizienten multiplizierte Binärsignale ohne zugehörige Vorzeicheninformation ausgeben;
- Vorzeichen-Multiplizier-Mittel (21), in denen die Vorzeichen der Transformations-Koeffizienten gespeichert sind und die das Vorzeichen (VZB) des jeweiligen Binärsignals mit dem Vorzeichen des jeweils zu adressierenden Transformations-Koeffizienten verknüpfen;
- in den Transformierern angeordnete Kombinations-Mittel (32, 35), in denen jeweils N der mit den Transformations-Koeffizienten multiplizierten Binärsignale entsprechend dem jeweils in den Vorzeichen-Multiplizier-Mitteln ermittelten Vorzeichen (VZ) in einem Addierer (32) kombiniert werden und als Ergebnis eines von N transformierten Ausgangssignalen (D0-D11) bilden.

2. Schaltung nach Anspruch 1, **dadurch gekennzeichnet,** daß in einer zusätzlichen Multiplizierschaltung (13) jeweils das höchstwertige Bit (MSB) für die mit den Transformations-Koeffizienten verknüpften Binärsignale gebildet und über Zwischenspeichermittel (14) den Kombinations-Mitteln (32, 35) zugeführt wird.

3. Schaltung nach Anspruch 1 oder 2, **dadurch gekennzeichnet,** daß die Speichermittel (30) und gegebenenfalls die zusätzliche Multiplizierschaltung (13) über eine weitere Adressleitung (12) zwischen verschiedenen Transformations-Arten umschaltbar ist, insbesondere für eine 8*8- und eine 2*(4*8)-DCT.

4. Schaltung nach einem oder mehreren der Ansprüche 1 bis 3, **dadurch gekennzeichnet,** daß zur Transformation bzw. Rücktransformation von zweidimensionalen Blöcken von Binärsignalen (D0-D7) die Binärsignale zuerst zeilenweise und anschließend spaltenweise transformiert bzw. rücktransformiert werden, oder umgekehrt.

## Claims

1. A circuit for the transformation or retransformation of in each case N input binary signals (EG, D0-D7) into in each case N output binary signals (AG) between the time domain and the frequency domain by means of a DCT (discrete cosine transformation), characterised by:
- N transformers (3-10) in each case supplied with the absolute values of N binary signals and containing storage means (30) with transformation coefficients stored therein without associated sign information, for the addressing of which the absolute values of the binary signals are used consecutively and which output binary signals multiplied by the respective transformation coefficient without associated sign information;
- sign multiplier means (21) in which the signs of the transformation coefficients are stored and which link ₜhe sign (VSB) of the respective binary signal with the sign of the transformation coefficient which is in each case to be addressed;
- combination means (32, 35) arranged in the transformers in which in each case N of the binary signals multiplied by the transformation coefficients are combined in an adder (32) in accordance with the sign (VZ) in each case determined in the sign multiplier means and as a result form one of N transformed output signals (D0-D11).

2. A circuit as claimed in Claim 1, characterised in that in an additional multiplier circuit (13) in each case the highest-value bit (MSB) for the binary signals linked with the transformation coefficients is formed and is supplied to the combination means (32, 35) via intermediate storage means (14).

3. A circuit as claimed in Claim 1 or 2, characterised in that the storage means (30) and optionally the additional multiplier circuit (13) can be switched over via a further address line (12) between different types of transformation, in particular for a 8*8- and a 2*(4*8)- DCT.

4. A circuit as claimed in one or more of Claims 1 to 3, characterised in that for the transformation or retransformation of two-dimensional blocks of binary signals (D0-D7) the binary signals are transformed or retransformed firstly row by row and then column by column, or vice versa.

## Revendications

1. Circuit pour la transformation ou la transformation en sens inverse de N signaux binaires d'entrée (EG, D0-D7) en N signaux binaires de sortie (AG) en les transposant de la plage de temps vers la plage de fréquences et inversement au moyen d'une DCT, **caractérisé en ce qu'il comporte :**
- N transformateurs (3-10) recevant les valeurs absolues de N signaux binaires et comportant des éléments de mémoire (30) qui contiennent des coefficients de transformation dépourvus de l'information relative au signe afférent et dont l'adressage est effectué an appliquant successivement les valeurs des signaux binaires et qui fournissent des signaux binaires multipliés par le coefficient de transformation respectif, mais dépourvus de l'information relative au signe afférent;
- des éléments multiplicateurs de signes (21) contenant les signes des coefficients de transformation et qui attachent le signe (VZB) du signal binaire en question au signe de celui des coefficients de transformation qui doit être adressé ;
- des éléments combinatoires (32, 35) prévus dans lesdits transformateurs, où un nombre N des signaux binaires multipliés par les coefficients de transformation sont combinés dans un additionneur (32) en fonction du signe respectif (VZ) défini au niveau des éléments multiplicateurs de signes, le résultat de cette opération représentant l'un des N signaux de sortie transformés (D0-D11).

2. Circuit selon la revendication 1 caractérisé en ce que qu'un circuit multiplicateur complémentaire (13) est prévu pour former le bit de poids fort (MSB) pour chacun des signaux binaires reliés aux coefficients de transformation et pour l'acheminer vers les éléments combinatoires (32, 35) en passant par des éléments de mémoire (14).

3. Circuit selon l'une quelconque des revendications 1 ou 2 caractérisé en ce que les éléments de mémoire (30) et éventuellement le circuit multiplicateur complémentaire (13) peuvent être commutés sur plusieurs modes de transformations, et notamment la DCT 8 x 8 et la DCT 2 x (4 x 8), grâce à une seconde ligne d'adressage (12).

4. Circuit selon l'une quelconque ou plusieurs des revendications 1 à 3 caractérisé en ce que la transformation et la transformation inverse de blocs bidimensionnels de signaux binaires (D0-D7) sont réalisées de telle manière que lesdits signaux binaires soient d'abord transformés et transformés en sens inverse en suivant les lignes, puis en suivant les colonnes, ou vice-versa.
